# EUROPEAN PATENT APPLICATION

(11) **EP 0 701 202 A1**
(43) Date of publication of application: **13.03.1996**
(21) Application number: 95304472.4
(22) Date of filing: 26.06.1995
(51) Int. Cl.: G06F 9/44

(54) **Graphical user interface for a computer system**

(30) Priority: 09.09.1994 GB 9418244
(71) Applicant: INTERNATIONAL COMPUTERS LIMITED, Putney, London, SW15 1SW (GB)
(72) Inventor: Andrew, Tarpey, Winnersh, Berkshire RG11 5JF (GB)
(74) Representative: Guyatt, Derek Charles

(57) **Abstract**

A computer system is described which allows a UNIX command, or piece of Korn Shell (KSH) code, to be run from a desktop environment in a user-friendly fashion, with prompting for parameterised input. The parameters, and the way they are to be input, are specified in a definition file. The definition file is processed to automatically generate a Windowing Korn Shell (WKS) script. When run, the WKS script displays a parameter input window, containing user interface objects such as text input fields, numerical input fields, menu buttons, window buttons, or exclusive choice boxes, as specified by the definition file, prompting the user to enter parameter values. The window also contains a Run button which, when actuated, runs the command with the parameter values specified by the user.

## Description

### Background to the Invention

This invention relates to a graphical user interface (GUI) for a computer system. The invention is particularly, although not exclusively, concerned with a novel technique for running commands in the UNIX® operating system. (UNIX is a registered trademark in the United States and other countries, licensed exclusively through X/Open Company Limited.)

The UNIX SVR4.2 Desktop provides a graphical user interface referred to as the desktop, comprising one or more windows containing icons representing programs. The desktop can be configured by adding icons for UNIX commands normally invoked from the command line. However, it does not allow the user to specify any parameterized input before running the command.

For example, a user may have an icon for remote login to a particular machine. If the user wishes to have easy remote login to 5 machines, then 5 icons are needed on the desktop. If a new machine is added to the network, then a new icon must be set up.

The object of the invention is to provide an improved user interface in which this problem is overcome.

### Summary of the Invention

According to the invention there is provided a computer system comprising:
(a) means for executing operating system commands, at least some of which require input parameters;
(b) means for executing programs in a graphical user interface language;
(c) display means for displaying information to a user;
(d) input means, including a pointer device, for inputting information from a user;
(e) a definition file containing a specification of at least one operating system command, and containing a specification of how each input parameter for said operating system command is to be obtained; and
(f) generation means for processing said definition file to automatically generate a program in said graphical user interface language, said program being adapted to perform a user dialog to obtain said input parameters and then to run said operating system command with said input parameters.

As will be seen, the present invention allows a graphical front end to be added to any UNIX command (or shell script) to handle parameter input. A parameterized command can thus be represented by a single icon which, when selected, prompts the user for the required parameters before running the command. The invention also allows user-friendly front ends to be put on UNIX commands which typically have unfriendly, non-intuitive interfaces.

### Brief Description of the Drawings

Figure 1 is a block diagram of a computer system embodying the invention.

Figure 2 is a flow chart showing the operation of a script generator.

### Description of an Embodiment of the Invention

One embodiment of the invention will now be described by way of example with reference to the accompanying drawings.

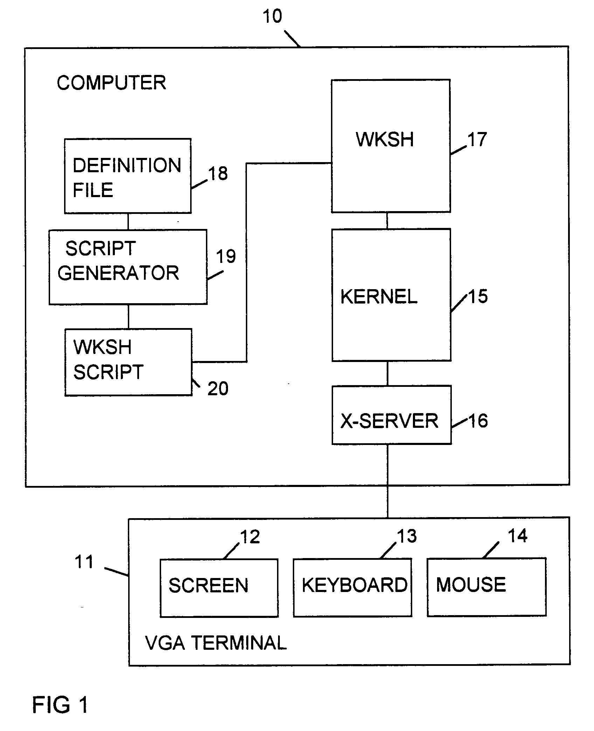

Referring to Figure 1, the computer system comprises a computer 10, which in this example may be an ICL DRS3000 computer supplied by International Computers Ltd. The computer 10 has a standard VGA terminal 11, comprising screen 12, keyboard 13, and mouse 14 (or other pointer device). The computer may also be connected to other devices, such as printers (not shown).

The computer runs a UNIX SVR4.2 operating system, including a Kernel 15, which communicates with the terminal 11 by way of an X-server interface 16. The operating system also includes a Windowing Korn Shell (WKSH) 17. WKSH is an extension to the standard Korn Shell (KSH) which allows shell scripts to have a graphical user interface (GUI). A GUI includes objects such as windows, icons, menus and dialog boxes with which the user can interact using the mouse and keyboard.

As will be described in more detail below, the system allows the user to add a graphical front end to any UNIX command (or shell script) to handle parameter input. The graphical front end is defined by a definition file 18, which can be created by the user using any convenient editor or word processor. A script generator 19 reads the definition file as input and automatically generates a WKSH script 20 as output. This script is associated with an icon on the desktop, so that it can be run by selecting the icon.

When run, the script displays a window on the screen, prompting the user to input parameters using the keyboard or mouse. The window contains a number of user interface objects such as text input fields, numerical input fields, menu buttons, window buttons or exclusive choice boxes, to allow the user to enter parameter values. The parameter input window also contains Run and Cancel buttons, and may optionally contain a Help button.

### Definition File Format

The definition file comprises a number of file sections, identified by the keywords INIT, HELP, COMMAND, WINDOW, FIELD, NUMBER, MENU, LIST, MULTILIST and YN. The COMMAND section is mandatory, while the other sections are optional.

The INIT file section defines a piece of KSH code to be inserted at the start of the WKSH script (for example to perform parameter validation).

The HELP section defines either a piece of text to be displayed in a popup window or a piece of KSH code to be called if the user actuates the Help button in the parameter input window. No Help button will be displayed unless this field is specified.

The COMMAND section defines a piece of KSH code to be executed when the Run button in the parameter input window is actuated. The code is enclosed in one of the following pairs of delimiters: {}, %%, or @@. Typically this code will contain a number of shell variables, which have been given values by the keywords FIELD, NUMBER, MENU, LIST, MULTILIST and YN (see below). The COMMAND section may contain an optional keyword XTERM, which indicates that the command is to be run in an xterm window. The XTERM keyword may be followed by fields specifying the width and height of the xterm window.

The WINDOW section allows the appearance of the window to be redefined. This section contains one or more of the following keywords:

TITLE - this keyword is followed by a string enclosed in double quotes, specifying the title for the window. The default title is "Specify Parameters".

MESS - this keyword is followed by a string enclosed in double quotes, specifying a message to be displayed at the top of the window. The default is no message.

MARKER - this keyword is followed by a string specifying the marker for mandatory parameters. The default is "**".

RUNLABEL - this keyword is followed by a string specifying the label for the Run button. The default is "Run".

CANLABEL - this keyword is followed by a string specifying the label for the Cancel button. The default is "Cancel".

### Parameter specification file sections

The FIELD, NUMBER, MENU, LIST, MULTILIST and YN file sections are referred to as parameter specification file sections, and define the method by which one or more shell variables, to be substituted as parameters in the COMMAND code, will be set up. Each of these keywords is followed by a string representing the variable name, and by a string enclosed in double quotes, representing a prompt to be displayed.

The FIELD section specifies a text input field. This section contains a width field specifying the visible size, in characters, of the text input field.

The NUMBER section specifies a numerical input field (with increment and decrement arrows). This section contains fields specifying the minimum and maximum values which are valid for the number.

The MENU section specifies a menu button which pops up a menu of options from which one (and only one) may be selected. The currently selected option will be displayed beside the menu button. There are two variations in the menu specification: either it contains a white-space separated list of options to be included in the menu, or else it contains a code section, specifying a piece of KSH code, the output from which will be used as the menu options.

The LIST section specifies a window button which pops up a scrollable list of options from which one (and only one) may be selected. The currently selected option will be displayed beside the window button. The LIST section has the same two variations as MENU.

The MULTILIST section specifies a window button which pops up a scrollable list of options from which any number may be selected. The currently selected options will be displayed beside the window button. The MULTILIST section has the same two variations as MENU.

The YN section specifies a simple exclusive choice (usually between yes and no). This section contains fields defining the values to be assigned to the shell variable when "yes" and "no" are selected.

### Optional Parameter Specification Keywords

The following optional keywords may be appended to the above parameter specifications.

DEFAULT specifies a default value for the shell variable. This keyword can be included in the FIELD, NUMBER, MENU or LIST file section.

MAXSIZE specifies the maximum number of characters permitted for a text input field.

FLAG specifies a string to be prepended to the value of the shell variable if it has a non-white-space value.

LINES specifies the number of lines visible in a scrollable window.

MANDATORY specifies that this parameter must have a value. This keyword can be included in the FIELD, NUMBER or MLIST file section. All mandatory parameters will have a mark (see MARKER within the WINDOW definition) added to their prompt to indicate that this parameter is mandatory. A check will be performed to ensure all mandatory parameters have a value before the COMMAND is run.

ADDQUOTES specifies that the value of the shell variable will be enclosed in double quote (") characters before substitution into the COMMAND.

ARRAY can be included in a MULTILIST file section, to specify that the shell variable is to be treated as an array variable. The first selected item will be put into var[0], the second into var[1], etc.

NOCURRENT indicates that the currently selected value for a MULTILIST parameter is not to be displayed beside the window button.

RETURN specifies a list of return values for a MENU, LIST or MULTILIST which should be used instead of the displayed option strings.

DEF_YES specifies that "yes" should be the default state for a YN parameter.

YESLABEL specifies an alternative label for the "Yes" button for a YN parameter.

NOLABEL specifies an alternative label for the "No" button for a YN parameter.

The following four keywords can be used to alter the appearance and sensitivity of the window. This is done by using the response to a YN parameter to make other parameters sensitive/insensitive or visible/invisible.

ENABLE specifies that a particular parameter should be enabled (made sensitive to user input) when the YN parameter has "yes" selected and disabled (made insensitive) when "no" is selected.

DISABLE specifies that a particular parameter should be disabled (made insensitive to user input) when the YN parameter has "yes" selected and enabled (made insensitive) when "no" is selected.

SHOW specifies that a particular parameter should be visible when the YN parameter has "yes" selected and invisible when "no" is selected.

HIDE specifies that a particular parameter should be invisible when the YN parameter has "yes" selected and visible when "no" is selected.

### Definition file examples

Two examples of definition files will now be given, to illustrate the definition file format.

### Example 1

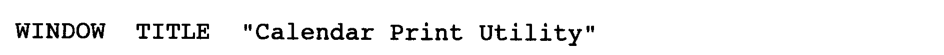

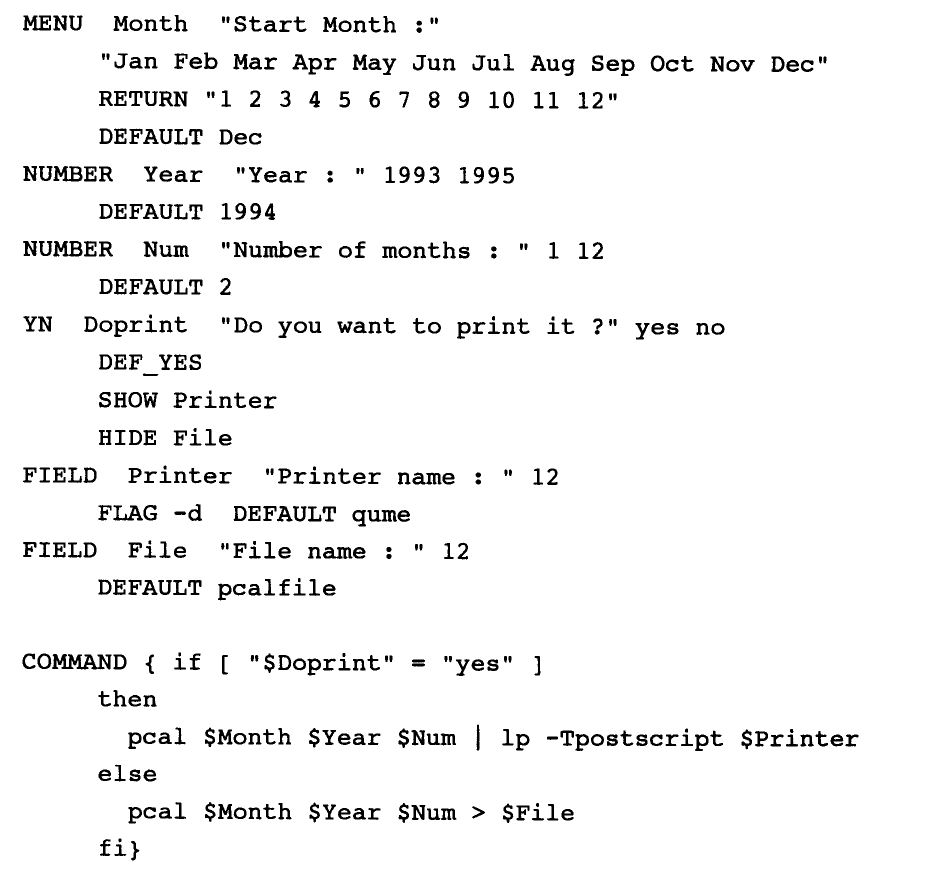

### Comments on Example 1

This definition file specifies a user interface for the UNIX command **pcal**, which creates a calendar file in Postscript format for specified months. The file can either be sent to a printer or saved to a file.

The TITLE section specifies that a window is to be displayed with the title "Calendar Print Utility".

The MENU section specifies a menu button, with label "Start Month: ", for obtaining the value for the variable Month. When this menu button is actuated it pops up a menu containing the options "Jan", "Feb" etc. The default selection is "Dec". The RETURN keyword used with this MENU converts the string representation of a month to an integer value: for example, if "Feb" is selected from the menu, Month will be assigned the value 2.

The first NUMBER section specifies that the user is to be prompted to enter the value for the variable Year, with valid values in the range 1993 to 1995, and a default of 1994. The second NUMBER section specifies that the user is to be prompted to enter the value for the variable Num, with valid values in the range 1 to 12 and a default value of 2.

The YN section specifies that the user is to be presented with a yes/no choice, prompted by "Do you want to print it?" The default value is "yes". If the user selects "yes", then the user is to be prompted for the variable Printer; otherwise, the user is to be prompted for the variable File.

The COMMAND keyword specifies KSH code which is to be executed when the Run button is actuated. The shell variables Month, Year, Num and Printer (or File) are substituted as parameters in the code. It can be seen that this code either prints the output of **pcal**, or saves it to a file, depending on whether or not the variable "Doprint" has the value "yes".

### Example 2

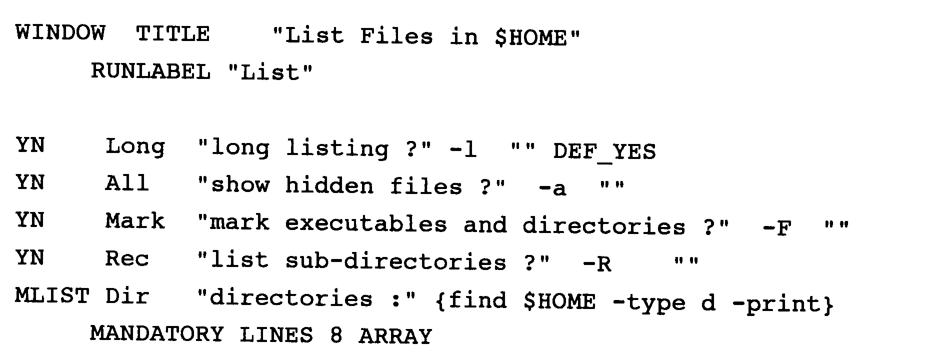

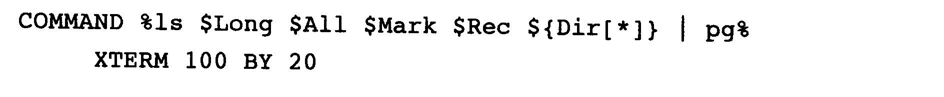

### Comments on Example 2

This definition file specifies a front end for the UNIX 1s command.

The RUNLABEL keyword in the WINDOW section specifies that the Run button is to be labelled "List".

The YN sections specify that the user is to be prompted to select various options for the command.

The MLIST section specifies a code section, which is used to generate a variable-length list of directories. The LINES keyword indicates that 8 lines of the list are to be visible in a scrollable window. The MANDATORY keyword indicates that it is mandatory for the user to select at least one of the items. The ARRAY keyword indicates that the items selected by the user are to be stored as an array Dir[ ].

The XTERM keyword in the COMMAND section specifies that the **ls** command is to be executed in an xterm window, 100 characters wide and 20 characters in height.

### Script generator

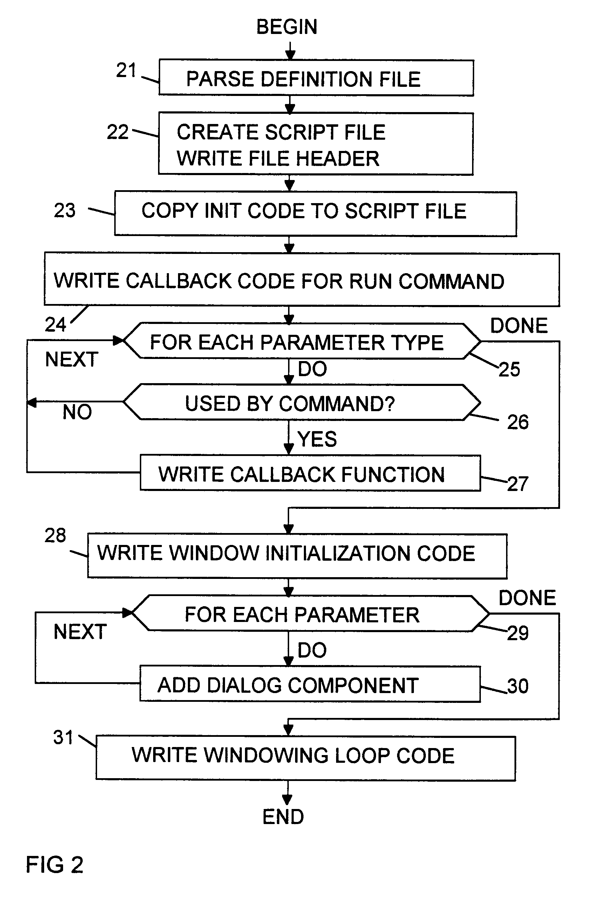

The script generator will now be described in more detail with reference to Figure 2.

(Step 21) The script generator first parses the definition file, using standard UNIX tools, to identify the keywords and fields in the file, and stores the parsed information in memory.

(Step 22) A new WKSH script file is then created, ready to receive the script file that is to be generated. A standard file header is written into the file, to identify it as a WKSH script.

(Step 23) If the definition file contains an INIT keyword, the script generator then copies the corresponding code section into the script file.

(Step 24) The script generator then writes a callback function for the Run button into the script file. This specifies the action to be taken when the Run button is actuated, and contains the code section specified in the definition file following the COMMAND keyword.

(Steps 25-27) The script generator then scans the parsed information for each possible parameter type (field, number, menu, list, multilist and YN) in turn. For each parameter type present, the script generator writes a callback function for that parameter type into the script file.

(Step 28) Windowing initialisation code is then written into the script file. This code creates a basic window on the screen, into which other user interface objects can be placed. Any modifications to the window appearance specified in the WINDOW section of the definition file are incorporated into this code.

(Steps 29-30) The script generator then writes a dialog component into the script file for each parameter specification file section in the definition file. Each of these dialog components creates a user interface object (text input field, numerical input field, menu button, window button, or exclusive choice box) on the screen, as specified by the parameter specification file section.

(Step 31) Finally, the script generator writes a windowing loop into the script file. This is a section of code which loops indefinitely, waiting for the user to interact with one of the dialog components. When a user interaction is detected, the appropriate callback function is called, to handle the user input in the appropriate manner.

In summary, it can be seen that the script generator creates a script file containing the following:
- file header
- initialisation code (if any)
- callback code for the Run button
- callback code for each parameter type
- window initialisation code
- dialog component for each parameter
- windowing loop code.

This script file can then be run from the desktop, when required, by selecting an icon representing the script.

### Conclusion

In conclusion, it can be seen that the system described above allows almost any UNIX command (or piece of KSH code) to be run from a desktop environment in a user-friendly fashion, with prompting for parameterised input. Parameters can be specified as text input fields, numerical input fields, a menu of options, a scrollable list of options (single or multiple selection), or a simple yes/no question

It will be appreciated that many modifications may be made to the system described above without departing from the scope of the invention.

## Claims

1. A computer system comprising:
(a) means (15) for executing operating system commands, at least some of which require input parameters;
(b) means (17) for executing programs in a graphical user interface language;
(c) display means (12) for displaying information to a user; and
(d) input means, including a pointer device (14), for inputting information from a user;
characterised by:
(e) a definition file (18) containing a specification of at least one operating system command, and containing a specification of how each input parameter for said operating system command is to be obtained; and
(f) generation means (19) for processing said definition file to automatically generate a program (20) in said graphical user interface language, said program being adapted to perform a user dialog to obtain said input parameters and then to run said operating system command with said input parameters.

2. A computer system according to Claim 1 wherein said means for executing programs comprises a Windowing Korn Shell.

3. A computer system according to Claim 1 or 2 wherein said generation means includes:
(a) means for generating instructions to display a window on said display means;
(b) means for generating instructions to display user interface objects in said window; and
(c) means for generating instructions for interacting with said user interface objects to obtain values for said input parameters.

4. A computer system according to Claim 3 wherein said user interface objects comprise one or more of the following: text input fields, numerical input fields, menus, and option lists.

5. A computer system according to Claim 3 or 4 wherein said generation means further includes:
(a) means for generating instructions to display a run button in said window; and
(c) means for generating instructions for running said operating system command, with said input parameters, when said run button is actuated.

6. A method of operating a computer system comprising the steps:
(a) creating a definition file containing a specification of at least one operating system command, and containing a specification of how each input parameter for said operating system command is to be obtained; and
(b) processing said definition file to automatically generate a program in said graphical user interface language, said program being adapted to perform a user dialog to obtain said parameters and then to run said operating system command; and
(c) executing said program in said graphical user interface language.
